# FASCICULE DE BREVET EUROPEEN

(11) **EP 1 296 469 B1**
(45) Date de publication et mention de la délivrance du brevet: **17.08.2011**
(21) Numéro de dépôt: 02292129.0
(22) Date de dépôt: 29.08.2002
(51) Int. Cl.: H04B 10/158, H04L 25/06

(54) **Dispositif de décision pour un signal électrique modulé**
Entscheidungseinrichtung für ein moduliertes elektrisches Signal
Decision device for a modulated electrical signal

(30) Priorité: 20.09.2001 FR 0112157
(43) Date de publication de la demande: 26.03.2003
(73) Titulaire: Alcatel Lucent, 75008 Paris (FR)
(72) Inventeur: Dupas, Arnaud, 91240 St-Michel-sur-Orge (FR); Penninckx, Denis, 91620 Nozay (FR); Zami, Thierry, 91300 Massy (FR)
(74) Mandataire: Korakis-Ménager, Sophie

(56) Documents cités:
- EP-A- 0 597 632
- US-A- 5 600 679
- US-A- 5 729 373

## Description

La présente invention concerne un dispositif de décision pour signal électrique modulé.

Elle se rapporte plus précisément à un dispositif de décision utilisable dans les récepteurs pour systèmes de transmission optique de signaux numériques. Un tel dispositif s'applique à un signal électrique modulé obtenu par conversion d'un signal optique modulé reçu. Ce signal électrique, délivré par un convertisseur, présente une amplitude variant en réponse à l'amplitude du signal optique et le dispositif comprend des moyens de comparaison de l'amplitude de ce signal électrique avec un niveau de référence.

Il est courant d'utiliser des échanges de flux de données optiques en mode continu, dits en flux continu, où l'information est transmise par un signal présentant une modulation continue. Cependant, ce mode de transmission nécessite des remises en forme des signaux et entraîne une perte de compacité.

Afin de réaliser un gain de mise en forme et de compacité et également permettre une commutation toute optique, donc plus rapide, aux noeuds de commutation, il est envisagé d'utiliser des échanges en mode « paquet ».

Dans les échanges de flux de données optiques en mode « paquet », le flux de données consiste en un grand nombre de paquets espacés temporellement les uns des autres, chaque paquet contenant notamment des informations nécessaires pour envoyer le paquet à sa destination ainsi que des informations relatives aux caractéristiques des données, par exemple données informatiques, données vocales, etc....

Les différents paquets reçus par un récepteur peuvent provenir de sources différentes et avoir été véhiculés par différents chemins optiques, ce qui entraîne que les paquets individuels arrivant à un récepteur peuvent avoir des niveaux de puissance optique différents et même souvent très différents.

US 5 600 679 décrit un appareil de réception de signal en rafale numérique optique. En recevant un signal en rafale numérique optique dans un système de communication optique, un signal en rafale numérique optique est converti en un signal en rafale numérique électrique. Un niveau de seuil est déterminé du signal en rafale numérique électrique. Basé sur un signal de seuil ayant le niveau de seuil déterminé on identifie, par un circuit d'identification, si chacun de bits du signal en rafale numérique électrique est dans un niveau haut ou un niveau bas. Quand un motif de synchronisation du signal en rafale numérique électrique est détecté, un signal de chasse est généré par un circuit de détection de synchronisation. La période de durée du signal de seuil est sélectionnée en tant qu'un de courts ou longs temps de durée selon que le signal de chasse est significatif ou non significatif.

Pour un signal optique en flux continu converti en signal électrique, il est classique d'associer un dispositif de décision électrique relié à une bascule et assurant une bonne interprétation du signal à une vitesse rapide. Un choix typique du niveau de référence peut être une valeur de seuil égale à 50% de l'amplitude maximale des impulsions électriques. Le dispositif de décision comporte alors des moyens de comparaison de l'amplitude du signal électrique avec ce niveau de référence.

Par ailleurs, en fonction de la dégradation du signal après les opérations de transmission et commutation dans les systèmes optiques, le niveau de référence dans un dispositif de décision électrique, en réception, doit être optimisé pour réaliser le meilleur taux d'erreur binaire (dit BER ou "Bit Error Rate" en anglais). Or, en règle générale, les phénomènes de bruit sont plus importants pour les niveaux supérieurs des impulsions constituant les signaux optiques numériques et c'est donc quand les impulsions du signal dépassent un niveau de référence suffisamment inférieur à l'amplitude maximale que l'impulsion est considérée comme un 1. Pour cela, on peut choisir comme niveau de référence une valeur optimale fixée correspondant à un seuil inférieure à 50% de l'amplitude maximale des impulsions optiques.

Compte tenu que dans le cas d'une transmission en mode « paquet », l'amplitude des impulsions optiques, donc électriques, peut varier fortement d'un paquet à l'autre, se pose le problème aujourd'hui non résolu de la détermination de ce niveau de référence et de réalisation d'un dispositif de décision applicable à ce mode de transmission.

La solution proposée par l'invention consiste en ce que le dispositif de décision comporte des moyens de mesure de l'amplitude moyenne dudit signal électrique et des moyens pour générer en fonction de cette mesure ledit niveau de référence de sorte que le rapport « niveau de référence / amplitude moyenne » peut être réglé à une valeur constante prédéterminée différente de 1.

Ainsi, le rapport « niveau de référence / amplitude moyenne » pouvant être ajusté selon les conditions particulières du système de transmission, le niveau de référence en résultant prendra une valeur restant optimale malgré les fluctuations d'amplitude du signal optique.

En particulier, on peut tenir compte du fait que le niveau de bruit qui se superpose aux impulsions des signaux optiques augmente généralement avec la puissance des niveaux hauts de ces impulsions et que les photodétecteurs habituellement utilisés pour convertir les signaux optiques en signaux électriques fournissent naturellement une grandeur électrique (courant ou tension) qui varie en réponse à l'amplitude des signaux optiques selon une fonction croissante.

Aussi, selon un mode de réalisation préféré, l'amplitude dudit signal électrique étant une fonction croissante de l'amplitude du signal optique modulé reçu, ladite valeur prédéterminée est inférieure à 1.

L'invention trouve son application préférée dans un dispositif de décision pour signal électrique modulée délivré par un convertisseur en réponse à un signal optique modulé reçu selon un mode « paquet ».

Dans ce cas, le dispositif comporte des moyens de mesure de l'amplitude moyenne pour chaque paquet dudit signal électrique et des moyens pour générer ledit niveau de référence pour chaque paquet dudit signal, ce rapport étant constant pour tous les paquets du signal.

De préférence le dispositif comporte une bascule changeant d'état pour une tension d'entrée nulle et, en amont de ladite bascule, un circuit de soustraction retranchant dudit signal électrique une tension égale audit niveau de référence. Ainsi le dispositif est optimisé pour effectuer un traitement particulièrement rapide.

Selon un mode de réalisation préféré, lesdits moyens de mesure comportent un amplificateur suivi d'un filtre intégrateur ayant une sortie reliée à un comparateur, ledit comparateur fournissant un signal de sortie à un multivibrateur monostable commutant un circuit d'échantillonnage et de maintien, et ladite sortie du filtre étant également reliée à une entrée de signal dudit circuit d'échantillonnage et de maintien.

Avantageusement, lesdits moyens pour générer ledit niveau de référence comporte un amplificateur à gain variable recevant un signal représentatif de l'amplitude moyenne dudit signal électrique et fournissant ledit niveau de référence, ledit gain ajustant ledit rapport « niveau de référence / amplitude moyenne ».

L'invention est décrite ci-après plus en détail grâce à des figures ne représentant qu'un mode de réalisation préféré.

La figure 1 est une représentation de deux paquets présentant un espace entre eux, les paquets ayant des amplitudes différentes.

La figure 2 est une représentation d'une réalisation du dispositif de décision conforme à l'invention, en réception d'un signal optique.

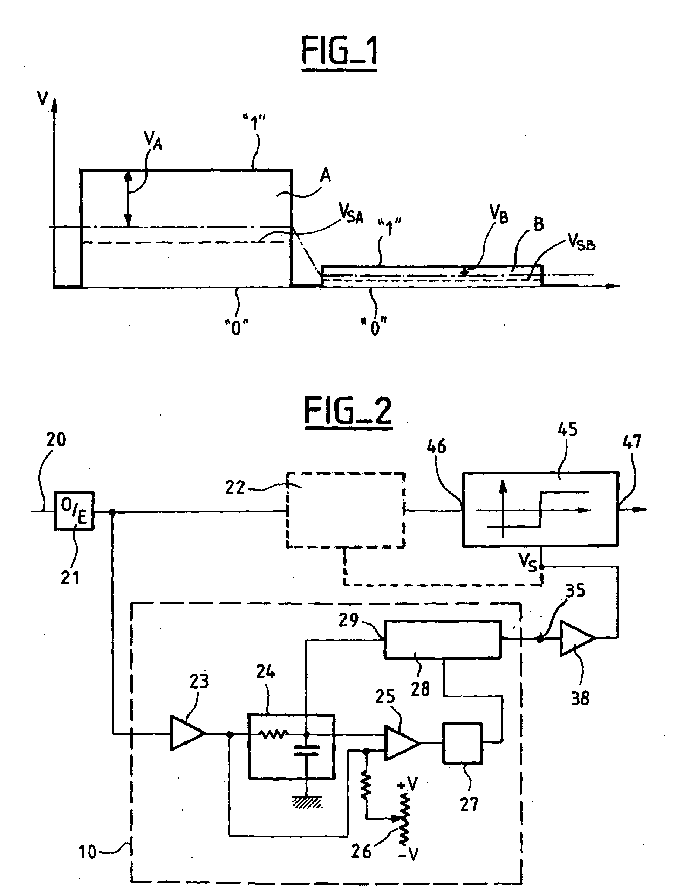

La figure 1 représente, avec en axe horizontal le temps t et en axe vertical la tension électrique V, l'enveloppe d'un signal électrique obtenu par conversion d'un signal optique au moyen d'une photodiode. Un paquet A est représenté avec un premier niveau moyen de tension et un paquet B est représenté avec un second niveau moyen de tension plus bas. Les niveaux logiques « 0 » correspondent à une tension identique pour les deux paquets, à savoir zéro Volt. Par contre, les niveaux logiques « 1 » correspondent à des tensions très différentes pour les deux paquets. Aussi, pour détecter les niveaux logiques « 1 » de chaque paquet au moyen d'une valeur de référence, des valeurs de références différentes doivent être définies pour les deux paquets pour permettre une décision et une détection correcte.

La figure 2 représente un exemple de réalisation du dispositif de décision conforme à l'invention.

Le signal optique issu par exemple d'une fibre optique 20 est transformé en une grandeur électrique au moyen d'un convertisseur optoélectronique 21 qui est par exemple une photodiode à 2,5 GHz. La sortie de ce convertisseur 21 est reliée à un amplificateur 23 dont la sortie est reliée par l'intermédiaire d'un filtre intégrateur 24 à un circuit qui réalise la détection du rythme des paquets et qui comprend en tant que composant principal un comparateur 25.

Le signal issu du convertisseur 21 est amplifié par l'amplificateur 23 et filtré par le filtre intégrateur 24, de façon à ce que le signal résultant masque les longues séries de zéros qui peuvent être contenues dans les paquets. De telles séries de zéros pourraient en effet être interprétées comme un espace entre paquets; en conséquence les bits différents de zéro apparaissant ensuite pourraient être de façon erronée interprétés comme des débuts de paquet. Ceci est évité grâce au filtre 24 qui est par exemple de type passe-bas réalisé au moyen d'un montage à résistance et capacité.

Le signal filtré alimente l'une des entrées du comparateur 25 pour y être comparé à une valeur fixe 26. L'arrivée d'un paquet est détectée par le comparateur 25 sous la forme d'un signal de sortie remis en forme au moyen d'un multivibrateur monostable 27.

Le front montant du signal en sortie du multivibrateur monostable 27 commute alors un circuit d'échantillonnage et de maintien 28 à un état actif pour un laps de temps déterminé. Comme le signal de sortie du filtre 24 alimente l'entrée de signal 29 du circuit d'échantillonnage et de maintien 28, un signal représentatif de la valeur moyenne de l'amplitude de l'en-tête du paquet apparaît alors à la sortie 35 de ce circuit 28.

Par un choix approprié de la valeur fixe 26 et de la constante de temps du filtre intégrateur 24, l'échantillon peut être pris au début des paquets où environ les cents premiers bits correspondent à une séquence fixée présentant généralement des successions de 0 et de 1, de façon à permettre une rapide synchronisation. Ainsi, la valeur échantillonnée dépend seulement de l'amplitude du signal et non des informations contenues dans les paquets.

Le principe de base de cet agencement est donc d'utiliser l'en-tête de chaque paquet pour déterminer le niveau moyen d'amplitude du paquet complet.

Le signal de sortie du circuit 28 est donc représentatif de l'amplitude moyenne dudit signal électrique. Ce signal est transmis à l'entrée d'un amplificateur à gain variable 38 dont la sortie délivre le niveau de référence Vs. Ainsi, le rapport « niveau de référence / amplitude moyenne » peut être ajusté directement à une valeur constante prédéterminée simplement en réglant le gain de l'amplificateur 38.

Selon une première possibilité, on peut prévoir une bascule 45 à seuil ajustable. Dans ce cas, le niveau de référence Vs est appliqué à l'entrée de réglage de seuil de la bascule 45 et le signal issu du convertisseur 21 est appliqué à l'entrée de signal 46 de la bascule.

Selon une autre possibilité, on peut prévoir une bascule 45 dont le seuil est la tension nulle. Dans ce cas, entre le convertisseur 21 et l'entrée 46 de la bascule 45 est disposé un circuit 22 (représenté en tirets) retranchant du signal électrique issu du convertisseur optoélectronique 21 la tension Vs issue de l'amplificateur 38. Le réglage s'effectue comme précédemment au moyen de l'amplificateur à gain variable 38.

L'idée de base de l'invention consiste à choisir un niveau de référence Vs tel que le rapport « niveau de référence / amplitude moyenne » peut être réglé selon les conditions particulières du système de transmission à une valeur constante prédéterminée différente de 1. Avantageusement ce rapport sera choisi inférieure à 1. Ce rapport est constant pour tous les paquets.

Le dispositif de décision conforme à l'invention comprend donc des moyens 10 de mesure de l'amplitude moyenne du signal électrique et des moyens 38 pour générer un tel niveau de référence Vs. Plus précisément, il comporte des moyens de mesure de l'amplitude moyenne de chaque paquet du signal électrique et des moyens pour générer le niveau de référence pour chaque paquet.

Les principaux signaux électriques impliqués sont schématisés sur la figure 1. Du signal issu du convertisseur 21 est mesurée l'amplitude moyenne V_{A} et V_{B} grâce au circuit 10, ceci pour chaque paquet, puis est généré par l'amplificateur 38 le niveau de référence Vs_{A} et Vs_{B}, ceci pour chaque paquet. Les rapports Vs_{A}/V_{A} et Vs_{B}/V_{B} sont égaux et constants quel que soit le paquet du signal.

Cette solution est applicable pour tout format du signal, en particulier pour le format RZ « retour à zéro » et pour le format NRZ « non retour à zéro ».

## Revendications

1. Dispositif de décision pour signal électrique modulé délivré par un convertisseur (21) en réponse à un signal optique modulé reçu, ledit dispositif comprenant des moyens de comparaison de l'amplitude dudit signal électrique avec un niveau de référence (Vs), des moyens de mesure (10) de l'amplitude moyenne dudit signal électrique et des moyens (38) pour générer en fonction de cette mesure ledit niveau de référence **caractérisé en ce que** le rapport « niveau de référence / amplitude moyenne » peut être réglé à une valeur constante prédéterminée différente de 1, ladite valeur étant ajustable à l'aide d'un gain variable.

2. Dispositif selon la revendication 1, **caractérisé en ce que** l'amplitude dudit signal électrique étant une fonction croissante de l'amplitude du signal optique modulé reçu, ladite valeur prédéterminée est inférieure à 1.

3. Dispositif de décision selon l'une des revendications 1 ou 2, **caractérisé en ce que** ledit signal électrique modulé étant délivré par ledit convertisseur (21) en réponse à un signal optique modulé reçu selon un mode « paquet », ledit dispositif comporte des moyens de mesure (10) de l'amplitude moyenne pour chaque paquet dudit signal électrique et des moyens (38) pour générer ledit niveau de référence (Vs) pour chaque paquet dudit signal et **en ce que** ledit rapport est constant pour tous les paquets du signal.

4. Dispositif selon l'une des revendications précédentes, **caractérisé en ce qu'**il comporte une bascule (45) changeant d'état pour une tension d'entrée nulle et, en amont de ladite bascule (45), un circuit de soustraction (22) retranchant dudit signal électrique une tension égale audit niveau de référence (Vs).

5. Dispositif selon l'une des revendications précédentes, **caractérisé en ce que** lesdits moyens de mesure comportent un amplificateur (23) suivi
d'un filtre intégrateur (24) ayant une sortie reliée à un comparateur (25), ledit comparateur (25) fournissant un signal de sortie à un multivibrateur monostable (27) commutant un circuit d'échantillonnage et de maintien (28), et ladite sortie du filtre (24) étant également reliée à une entrée de signal (29) dudit circuit d'échantillonnage et de maintien (28).

6. Dispositif selon l'une des revendications précédentes, **caractérisé en ce que** lesdits moyens pour générer ledit niveau de référence comporte un amplificateur comprenant ledit gain variable (38) recevant un signal représentatif de ladite amplitude moyenne dudit signal électrique et fournissant ledit niveau de référence.

## Claims

1. A decision-making device for a modulated electrical signal delivered by a converter (21) in response to a received modulated optical signal, said device comprising means for comparing the amplitude of said electrical signal with a reference level (Vs), means for measuring (10) the mean amplitude of said electrical signal, and means (38) for generating, as a function of that measurement, said reference level, **characterized in that** the "reference level/mean amplitude" ratio may be sel to a constant predetermined value different from 1, said value being adjustable with the help of a variable gain.

2. A device according to claim 1, **characterized in that** the amplitude of said electrical signal being an increasing function of the amplitude of the received modulated optical signal, said predetermined value is less than 1,

3. A decision-making device according to one of the claims 1 or 2, **characterized in that** said modulated electrical signal being delivered by said converter (21) in response to a modulated optical signal received in "packet" mode, said device comprises means for measuring (10) the mean amplitude for each packet of said electrical signal and means (38) for generating said reference level (Vs) for each packet of said signal and **in that** said ratio is constant for all of the signal's packets.

4. A device according to one of the preceding claims, **characterized in that** it comprises a toggle (45) changing a state for an input voltage of zero and, upstream of said toggle (45), a subtraction circuit (22) reducing said electrical signal by a voltage equal to said reference voltage (Vs).

5. A device according to one of the preceding claims, **characterized in that** said means for measuring comprise an amplifier (23) follower by an integrating filter (24) having an output connected to a comparator (25), said comparator (25) providing an output signal to a monostable multivibrator (27) switching a sample-and-hold circuit (28), and said output of the filter (24) also being connected to a signal input (29) of said sample-and-hold circuit (28).

6. A device according to one of the preceding claims, **characterized in that** said means for generating said reference level comprise an amplifier comprising said variable gain (38) receiving a signal representative of said mean amplitude of said electrical signal and providing said reference level.

## Patentansprüche

1. Entscheidungseinrichtung für ein von einem Wandler (21) in Reaktion auf ein empfangenes moduliertes optisches Signal ausgegebenes moduliertes elektrisches Signal, wobei die besagte Einrichtung Mittel zum Vergleichen der Amplitude des besagten elektrischen Signals mit einem Bezugspegel (Vs), Mittel zum Messen (10) der mittleren Amplitude des besagten elektrischen Signals, und Mittel (38) zum Erzeugen des besagten Bezugspegels in Abhängigkeit von dieser Messung umfasst, **dadurch gekennzeichnet, dass** das Verhältnis "Bezugspegel / mittlere Amplitude" auf einen anderen vorgegebenen konstanten Wert als 1 eingestellt werden kann, wobei der besagte Wert anhand einer variablen Verstärkung anpassbar ist.

2. Einrichtung nach Anspruch 1, **dadurch gekennzeichnet, dass** die Amplitude des besagten elektrischen Signals eine steigende Funktion der Amplitude des empfangenen modulierten optischen Signals ist, wobei der besagte vorgegebene Wert kleiner als 1 ist.

3. Entscheldungseinrichtung nach einem der Ansprüche 1 oder 2, **dadurch gekennzeichnet, dass** das besagte modulierte elektrische Signal von dem besagten Wandler (21) in Reaktion auf ein gemäß einem "Paket"-Modus empfangenes moduliertes optisches Signal ausgegeben wird, wobei die besagte Einrichtung Mittel (10) zum Messen der mittleren Amplitude für jedes Paket des besagten elektrischen Signals und Mittel (38) zum Erzeugen des besagten Bezugspegels (Vs) für jedes Paket des besagten Signals umfasst, und dass das besagte Verhältnis für alle Pakete des Signals konstant ist.

4. Einrichtung nach einem der vorstehenden Ansprüche, **dadurch gekennzeichnet, dass** sie eine Wippe, (45), deren Zustand sich bei einer Eingangsspannung von Null ändert, und einen Subtrahierer (22), der der besagten Wippe (45) vorgeschaltet ist und von dem besagten elektrischen Signal eine Spannung, welche dem besagten Bezugspegel (Vs) entspricht, abzieht, umfasst.

5. Einrichtung nach einem der vorstehenden Ansprüche, **dadurch gekennzeichnet, dass** die besagten Messmittel einen Verstärker (23), gefolgt von einem Integrierfilter (24) mit einem an einen Vergleicher (25) angeschlossenen Ausgang, umfassen, wobei der besagte Vergleicher (25) ein Ausgangssignal an einen monostabilen Multivibrator (27) liefert, welcher eine Abtast- und Halteschaltung (28) schaltet, und dass der besagte Ausgang des Filters (24) ebenfalls an einen Signaleingang (29) der besagten Abtast- und Halteschaltung (28) angeschlossen ist.

6. Einrichtung nach einem der vorstehenden Ansprüche, **dadurch gekennzeichnet, dass** die besagten Mittel zum Erzeugen des besagten Bezugspegels einen Verstärker mit der besagten variablen Verstärkung (38), der ein Signal empfängt, welches für die besagte mittlere Amplitude des besagten elektrischen Signals repräsentativ ist, und den besagten Bezugspegel liefert, umfassen.
